# EUROPÄISCHE PATENTSCHRIFT

(11) **EP 3 810 999 B1**
(45) Veröffentlichungstag und Bekanntmachung des Hinweises auf die Patenterteilung: **03.01.2024**
(21) Anmeldenummer: 19734019.3
(22) Anmeldetag: 21.06.2019
(51) Int. Cl.: F25B 1/00, F25B 30/02, F25B 31/00, F25B 25/00

(54) **VERFAHREN ZUM BETRIEB EINER WÄRMEPUMPE UND EINE KÄLTEMASCHINE**
METHOD FOR OPERATING A HEAT PUMP, AND A REFRIGERATION MACHINE
PROCÉDÉ DE FONCTIONNEMENT D'UNE POMPE À CHALEUR ET MACHINE FRIGORIFIQUE

(30) Priorität: 20.06.2018 DE 102018114786
(43) Veröffentlichungstag der Anmeldung: 28.04.2021
(73) Patentinhaber: Stiebel Eltron GmbH & Co. KG, 37603 Holzminden (DE)
(72) Erfinder: BURGMANN, Johannes, 37671 Höxter (DE); SCHRÖDER, Nikolas, 32839 Steinheim (DE)
(74) Vertreter: Eisenführ Speiser
(86) Internationale Anmeldenummer: PCT/EP2019/066454
(87) Internationale Veröffentlichungsnummer: WO 2019/243566

(56) Entgegenhaltungen:
- EP-A1- 1 862 743
- EP-A1- 2 500 676
- EP-A1- 3 264 008
- AT-U1- 12 869
- JP-A- 2006 170 537

## Beschreibung

Die Erfindung betrifft ein Verfahren zum Betrieb einer Wärmepumpe, wie beansprucht im Anspruch 1, und eine Kältemaschine, wie beansprucht im Anspruch 6, und eine Wärmepumpe, beansprucht im Anspruch 9. Die Wärmepumpe wird in einer Heizbetriebsart oder einer Kühlbetriebsart betrieben, wobei Wärme zwischen einem ersten Kältemittel und einem Wärmeträgerfluid übertragen wird. Das erste Kältemittel kann mit einem Verdichter in einem ersten Kältemittelkreislauf umgetrieben werden, so dass ein erster Massenstrom des ersten Kältemittels durch den ersten Kältemittelkreislauf läuft und eine Einstellung einer Drehzahl am Verdichter mit einem Inverter geregelt ist.

Aus AT 12869 U1 ist eine Kraftwärmemaschine bekannt, welche ein Wärmeeintragselement und ein Wärmeaustragselement aufweist. Weiterhin sind eine Steuereinrichtung und ein Wärmeübertragungselement vorgesehen. Das Wärmeeintragselement ist mittels einer Hochenergiefluidleitung mit dem Wärmeaustragselement verbunden. Das Wärmeaustragselement ist mittels einer Niederenergiefluidleitung mit dem Wärmeeintragselement verbunden. Ferner ist die Steuereinrichtung eingerichtet, den Betrieb der Kraftwärmemaschine zu steuern und das Wärmeübertragungselement ist derart eingerichtet, dass sie Abwärme der Steuereinrichtung in die Niederenergiefluidleitung einspeist. Somit wird Wärme der Steuereinrichtung auf das Kältemittel der Kältemaschine im Niederdruckbereich übertragen.

Marktbekannt sind weiterhin Wärmepumpen oder Kältemaschinen, die in einem Heizbetrieb oder in einem Kühlbetrieb arbeiten können.

Die JP-A-2006 170 537 offenbart ein Verfahren mit den vorkennzeichnenden Merkmalen des Anspruchs 1.

Aufgabe der Erfindung ist es, eine effizient arbeitende Wärmepumpe für Heiz- und/oder Kühlbetrieb zu schaffen, bei der die elektronischen Bauteile des Inverters vor einer Temperaturüberschreitung und vor Feuchtigkeit geschützt sind, insbesondere vor Kondensat. Fehlfunktionen durch Wasser auf elektronischen Bauteilen, Fehlerströme und Korrosion sollen sicher und energieeffizient vermieden werden.

Gelöst ist die Aufgabe gemäß den Merkmalen des Anspruchs 1.

Inverterwärme, die durch elektrische Verluste hauptsächlich im Inverter entsteht wird an das Wärmeträgerfluid abgegeben. Dabei wird die Inverterwärme in einem zweiten Kältemittelkreislauf auf ein zweites Kältemittel zur Kühlung des Inverters übertragen und das zweite Kältemittel gibt die Inverterwärme an das Wärmeträgerfluid ab. Ein Maß für die Inverterwärme, die vom Inverter auf das zweite Kältemittel übertragen wird, ist auf eine Mindesttemperatur des Inverters abgestimmt. Ein zweiter Massenstrom des zweiten Kältemittels wird so weit reduziert, dass die Mindesttemperatur nicht unterschritten wird. Das Maß der Inverterwärme ist weiterhin so abgestimmt, dass der Inverter eine Maximaltemperatur nicht erreicht oder nicht überschreitet, wozu der Massenstrom so weit erhöht ist, dass die Maximaltemperatur nicht überschritten wird. Das Maß der Inverterwärme ist abhängig von einem am Inverter vorliegenden Betriebszustand. Ein zweiter Massenstrom des zweiten Kältemittels wird über einen Öffnungsgrad eines Ventils im zweiten Kältemittelkreislauf abhängig von diesem Betriebszustand gesteuert.

Das Wärmeträgerfluid ist vorteilhaft Wasser eines Heizungskreises. Somit wird die Abwärme des Inverters, also die Inverterwärme, vom Inverter über den zweiten Kältemittelkreislauf auf das Wärmeträgerfluid, hier vorteilhaft auf das Wasser des Heizungskreises, übertragen. Somit wird die Kältemaschine effizient betrieben und die Leistungszahl der Wärmepumpe steigt insgesamt, da die Abwärme des Inverters auf die Heizung übertragen wird.

Dies erfolgt vorteilhaft auch in dem Fall, wenn die Wärmepumpe in einem Kühlmodus arbeitet, zumindest so lange bis eine bestimmte Mindesttemperatur des Inverters erreicht ist, die nicht unterschritten werden darf, damit dieser nicht feucht wird.

Gemäß einem vorteilhaften Gedanken der Erfindung ist das Maß der Inverterwärme, die vom Inverter auf das zweite Kältemittel übertragen wird auf eine Mindesttemperatur des Inverters abgestimmt. Ein zweiter Massenstrom des zweiten Kältemittels ist so gesteuert oder reduziert, dass die Mindesttemperatur des Inverters nicht unterschritten wird.

In einem vorteilhaften Ausführungsbeispiel wird der Massenstrom des zweiten Kältemittels "On - off" gesteuert, somit ganz unterbrochen oder zugelassen, insbesondere durch ein Ventil, welches geöffnet oder geschlossen ist.

Das Maß der Inverterwärme ist weiterhin vorteilhaft so geregelt, dass der Inverter eine Maximaltemperatur nicht erreicht oder die Maximaltemperatur nicht überschreitet, wozu der Massenstrom des zweiten Kältemittels so weit erhöht wird, dass die Maximaltemperatur des Inverters nicht überschritten wird.

Vorteilhaft ist der Druck des zweiten Kältemittels im zweiten Kältemittelkreislauf abhängig vom zweiten Kältemittel. Der Druck ist so gewählt, dass eine Starttemperatur der Verdampfung des zweiten Kältemittels etwa bei der Mindesttemperatur liegt. Somit erfolgt eine Verdampfung des zweiten Kältemittels erst dann, wenn der Inverter seine Mindesttemperatur in etwa erreicht hat.

Der Betriebszustand des Inverters ist insbesondere durch seine Temperatur dargestellt. Somit wird vorteilhaft der Massenstrom des zweiten Kältemittels im zweiten Kältemittelkreislauf durch die Einstellung des Öffnungsgrads des Ventils abhängig von der Temperatur des Inverters gesteuert, so dass diese insbesondere in einem Temperaturbereich liegt.

Gemäß einem anderen Gedanken der Erfindung bezieht sich der Betriebszustand des Inverters auf einen Parameter der Wärmepumpe, der Einfluss auf eine Invertertemperatur hat. Bei einer steigenden Leistungsaufnahme der Wärmepumpe, insbesondere des Verdichters wird somit der Öffnungsgrad des Ventils vorteilhaft erhöht, wodurch der Massenstrom des zweiten Kältemittels erhöht ist und somit das Maß der Inverterwärme, die auf das zweite Kältemittel übertragen wird, steigt, wodurch der Inverter stärker gekühlt ist.

Gemäß einem Verfahren, bei dem vorteilhaft ein Parameter verwendet wird, wird vorteilhaft von einem Zustand der Wärmepumpe auf den Betriebszustand des Inverters geschlossen.

Hierbei können vorteilhaft noch weitere Parameter der Wärmepumpe für die Einstellung des zweiten Massenstroms verwendet werden. Ein Parameter der Wärmepumpe ist auch die Umgebungstemperatur der Wärmepumpe, eine Raumtemperatur eines von der Wärmepumpe beheizten Raumes oder eine Vorlauftemperatur oder eine Rücklauftemperatur des Wärmeträgermediums, insbesondere Heizungswasser, oder auch die Warmwassertemperatur eines Warmwasserspeichers sowie andere Druck- oder Temperaturparameter auch des ersten Kältemittelkreislaufs.

In einem vorteilhaften direkten Messverfahren wird die Invertertemperatur gemessen oder anderweitig ermittelt, beispielsweise abhängig vom Betriebszustand des Inverters oder vom Zustand der Wärmepumpe und deren Parametern. Der Massenstrom vom zweiten Kältemittel wird erhöht, wenn die Invertertemperatur steigt, wodurch die Invertertemperatur nicht über die Maximaltemperatur hinaussteigt. Der Massenstrom wird vorteilhaft weiterhin stark gedrosselt oder ganz gesperrt und das Ventil somit nahezu ganz geschlossen oder geschlossen, wenn der Inverter zu kalt wird, was spätestens dann erfolgt, wenn die Mindesttemperatur vorliegt oder unterschritten ist.

Gemäß einem weiteren vorteilhaften Verfahren ist im zweiten Kältemittelkreislauf ein drittes Kältemittel eingefüllt. Das dritte Kältemittel im zweiten Kältemittelkreislauf ist nahezu ständig gasförmig, zumindest vorteilhaft im Betrieb der Wärmepumpe. Ab einer dritten Temperatur des zweiten Kältemittels, wenn also der Druck im zweiten Kältemittelkreislauf steigt, wird das dritte Kältemittel vom sich durch Verdampfung ausdehnenden zweiten Kältemittel in eine Kammer verdrängt. Das zweite Kältemittel gelangt somit, mit steigenden Temperaturen oder Drücken, im zweiten Kältemittelkreislauf zu einer zweiten Wärmeübertragerzone. Hiermit wird die Wärmeübertragung im zweiten Kältemittelkreislauf vorteilhaft erst ab einer vorgegebenen Temperatur oder Druck in Gang gesetzt. Soweit das gasförmig vorliegende dritte Kältemittel noch im Bereich des zweiten Wärmeübertragers vorliegt, erfolgt keine oder zumindest nur eine geringe Wärmeübertragung des zweiten Kältemittels auf den zweiten Wärmeübertrager. Die Wärmeübertragung wird erst dann in Gang gesetzt, wenn das gasförmige zweite Kältemittel an den zweiten Wärmeübertrager gelangen kann, wo es kondensiert. Das dritte Kältemittel ist zumindest so ausgelegt oder getrimmt, dass es in den üblichen Betriebszuständen der Wärmepumpe, am zweiten Wärmeübertrager des zweiten Kältemittelkreislaufs gasförmig bleibt und dort nicht kondensiert. Das dritte Kältemittel sollte vorteilhaft immer gasförmig vorliegen.

Eine vorteilhafte Kältemaschine, insbesondere eine Wärmepumpe zum Anschluss eines Wärmeträgerkreislaufs zum Heizen und/oder Kühlen, weist einen ersten Wärmeübertrager auf, der zwischen einem ersten Kältemittelkreislauf und dem Wärmeträgerkreislauf angeordnet ist. Im ersten Kältemittelkreislauf ist weiterhin ein drehzahlgeregelter Verdichter angeordnet, der elektrisch mit dem Inverter verbunden ist, von dem der Verdichter selbst gesteuert wird. Der Inverter ist thermisch hingegen mit einem zweiten Kältemittelkreislauf verbunden, in dem ein zweites Kältemittel enthalten ist und der zweite Kältemittelkreislauf ist mit dem Wärmeträgerkreislauf verbunden.

Eine derartige Kältemaschine ist vorteilhaft mit einem zweiten Kältemittelkreislauf als Thermosiphon zur Aufnahme von kondensiertem zweiten Kältemittel ausgestattet.

Der zweite Kältemittelkreislauf weist vorteilhaft ein Wärmerohr mit dem zweiten flüssigen Kältemittel und/oder gasförmigen Kältemittel zur Übertragung der Inverterwärme auf das Wärmeträgerfluid auf.

Vorteilhaft ist der zweite Kältemittelkreislauf mit einer ersten Wärmeübertragerzone ausgestattet, die als Verdampfer mit dem Inverter zur Wärmeübertragung der Inverterwärme verbunden ist. Weiterhin ist vorteilhaft eine zweite Wärmeübertragerzone, die als Verflüssiger des zweiten Kältemittels dienen soll, vorgesehen, die mit dem Wärmeträgerkreislauf verbunden ist.

Bei dem Verfahren wird die Drehzahl des Verdichters vorteilhaft abhängig von einem Energiebedarf eines Verbrauchers mittels eines Inverters geregelt, wobei die Temperatur t_{W} eines Wärmeträgerfluids zur Temperierung des Inverters in einem Heizbetrieb der Kältemaschine vorteilhaft zwischen 15 °C und 85 °C liegt.

Das Wärmeträgermedium kann Wasser, Sole, Luft oder ein anderes Fluid sein.

Die Temperatur t_{W} des Wärmeträgerfluids zur Temperierung des Inverters liegt in einem Kühlbetrieb der Kältemaschine vorteilhaft zwischen 7 °C und 25 °C.

Vorteilhaft wird die Temperatur des Wärmeträgerfluids in jedem Betriebszustand über einem Fluidmindestwert, insbesondere über 7 °C gehalten, wobei ein Kältemittel in einem Wärmerohr vorteilhaft in einem Temperaturbereich zwischen 7 °C und 115 °C liegt.

Die Kühleinheit des Inverters hält den Inverter vorteilhaft in einem Temperaturbereich zwischen 15 °C und 85 °C.

In einem Vorlauf des Wärmeträgerkreislaufs treten vorteilhaft Temperaturen zwischen 15 °C bis 85 °C auf und in einem Rücklauf des Wärmeträgerkreislauf 15 °C bis 65 °C.

Die Temperaturen des ersten Kältemittels in der Kältemaschine betragen vorteilhaft -30 °C bis +130 °C.

Bei einer Wärmepumpe mit einer Solequelle sind soleseitig vorteilhaft Temperaturen von etwa -15 °C bis +25 °C vorzufinden. Bei Luft-Wasserwärmepumpen liegen die Quelltemperaturen der Luft auch unter -15 °C und über 25 °C, in Mitteleuropa in der Regel etwa zwischen -25 und 40 °C.

Die erste Wärmeübertragerzone des zweiten Kältemittelkreislaufs weist als Verdampfer vorteilhaft eine kleinere Verdampferfläche auf als eine Kondensationsfläche der zweiten Wärmeübertragerzone.

Gemäß einem Gedanken der Erfindung ist im Wärmerohr ein Ventil angeordnet, mit dem der Kreislauf unterbrochen oder gedrosselt wird, wenn der Inverter zu heiß werden würde, womit die Maximaltemperatur nicht überschritten wird.

Vorteilhaft besteht das Wärmerohr in der ersten Wärmeübertragerzone zumindest teilweise aus einem oder mehreren Verdampferrohren.

Das Wärmerohr kann vorteilhaft insbesondere in der zweiten Wärmeübertragerzone als Rohr in Rohr-Wärmeaustauscher ausgebildet sein.

Gemäß einem weiteren vorteilhaften Gedanken ist der Wärmeträgerkreislauf durch ein inneres Rohr oder ein äußeres Rohr gebildet. Besonders vorteilhaft ist der Wärmeträgerkreislauf mit dem inneren Rohr ausgebildet und die zweite Wärmeübertragerzone vorteilhaft koaxial als äußeres Rohr um das innere Rohr angebracht. Rippen sind vorteilhaft als Übertragungsflächen an der ersten Wärmeübertragerzone und/oder der zweiten Wärmeübertragerzone angebracht.

Der zweite Kältemittelkreislauf weist vorteilhaft einen Anschluss mit einem Schraderventil zum Befüllen des zweiten Kältemittelkreislaufs auf, oder ein Befüllstutzen ist vorteilhaft vorgesehen. Der Befüllstutzen wird nach dem Befüllen vorteilhaft zugekneift und zugeschweißt, zugelötet oder anderweitig gasdicht verschlossen.
- Fig. 1: zeigt einen zweiten Kältemittelkreislauf, der an den Wärmeträger Kreislauf angeschlossen ist,
- Fig. 2: zeigt schematisch einen zweiten Kältemittelkreislauf mit einer ersten Wärmeübertragerzone und einer zweiten Wärmeübertragerzone,
- Fig. 3: zeigt schematisch einen zweiten Kältemittelkreislauf zusätzlich mit einem Ventil,
- Fig. 4: zeigt einen zweiten Kältemittelkreislauf in der Art eines Wärmerohres,
- Fig. 5: zeigt eine zweite Übertragerzone mit einem Rohr-in-Rohr-Wärmeübertrager,
- Fig. 6: zeigt einen Kältemittelkreislauf mit einer ersten Wärmeübertragerzone und einer zweiten Wärmeübertragerzone mit einem Ventil,
- Fig. 7: zeigt den Kältemittelkreislauf gemäß Figur sechs ohne Ventil,
- Fig. 8: zeigt den Prozessablauf im zweiten Kältemittelkreislauf, mit einem Dritten Kältemittel,
- Fig. 9: zeigt ein Ausführungsbeispiel eines zweiten Kältemittelkreislaufs einer Wärmepumpe nach Art eines Wärmerohrs,
- Fig. 10: zeigt ein Ausführungsbeispiel eines zweiten Kältemittelkreislaufs mit einem zweiten Rücklauf,
- Fig. 11+12: zeigen die Anbindung der zweiten Wärmeübertragerzone des zweiten Kältemittelkreislaufs,
- Fig. 13+14: zeigen verschiedene Ausführungen, wie die Integration der ersten Wärmeübertragerzone im Kühlkörper erfolgt,
- Fig. 15-17: zeigen verschiedene Ausführungen der Anbindungen der ersten Wärmeübertragerzone an die zu kühlenden Bauteile des Inverters,
- Fig. 18: zeigt verschiedene Ansichten eines zweiten Kältemittelkreislaufs mit Rohrin-Rohr Wärmeübertrager und
- Fig. 19: zeigt verschiedene Ansichten eines zweiten Kältemittelkreislaufs mit Bündelwärmeübertrager.

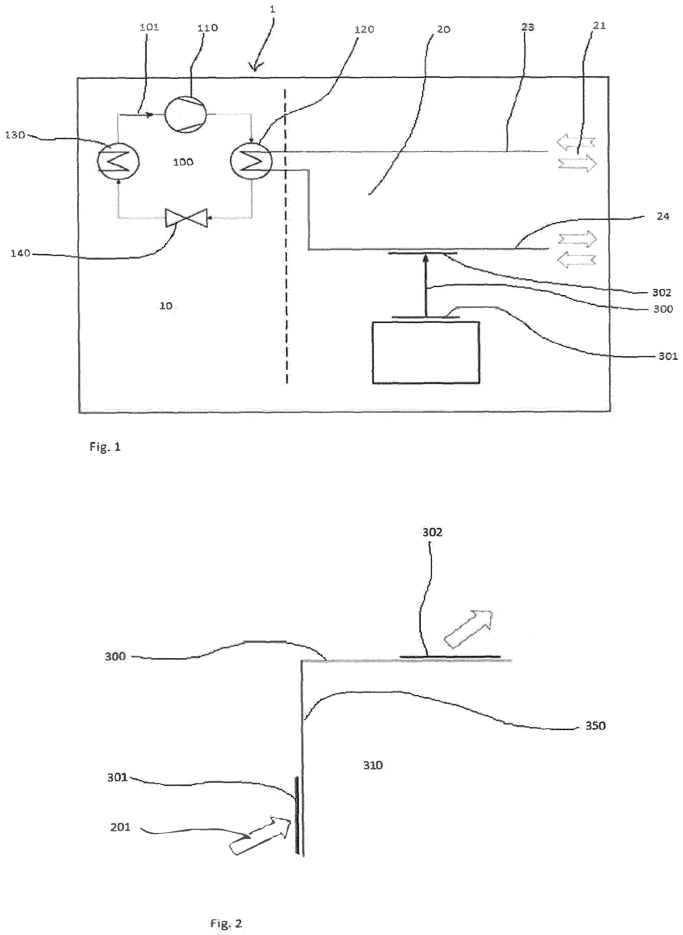

Das Verfahren wird im Ausführungsbeispiel gemäß Figur 1 durchgeführt. In einer Wärmepumpe 1 ist eine Kältemaschine 10 mit einem ersten Kältemittelkreislauf 100 angeordnet. Die Wärmepumpe 1 weist weiterhin zumindest einen Vorlaufanschluss 24 und einen Rücklaufanschluss 23 auf. Eine Fluidrichtung 21, mit der das Wärmeträgermedium durch den Wärmeträgerkreislauf 20 strömen kann, kann in der Richtung wechseln, wie dies in Figur 1 gezeigt ist.

Der erste Kältemittelkreislauf 100 ist mit einem ersten Kältemittel befüllt, welches in eine erste Massenstromrichtung 101 von einem Verdichter 110 umgetrieben werden kann. Der Massenstrom des ersten Kältemittels ergibt sich im Wesentlichen durch die Verdichterleistung und aber auch durch eine Stellung eines Expansionsventils 140. Das erste Kältemittel wird weiterhin durch einen Verdampfer 130 und einen ersten Wärmeübertrager 120, der im Heizbetrieb als Verflüssiger arbeitet, umgetrieben. Die Kältemaschine 10 ist somit über den ersten Wärmeübertrager 120 an den Wärmeträgerkreislauf thermisch gekoppelt.

Weiterhin ist eine zweite Wärmeübertragerzone 302 mit dem Wärmeträgerkreislauf 20 thermisch gekoppelt. Die zweite Wärmeübertragerzone 302 ist im Ausführungsbeispiel in einem zweiten Wärmeübertrager 300 integriert, womit der zweite Wärmeübertrager 300 zur kontrollierten Wärmeübertragung von Inverterwärme 201 auf den Wärmeträgerkreislauf 20 vorgesehen ist. Inverterwärme 201 wird über eine erste Wärmeübertragerzone 301 vom Inverter 200 auf den zweiten Wärmeübertrager 300 übertragen.

Gemäß Figur 2 ist ein zweiter Kältemittelkreislauf 310 als ein Wärmerohr ausgebildet. Dabei wird ein zweites flüssiges Kältemittel 312 in einem Wärmerohr 350 an der ersten Wärmeübertragerzone 301 verdampft. Somit wird die Inverterwärme 201 auf das zweite flüssige Kältemittel 312 übertragen. Das zweite flüssige Kältemittel 312 verdampft und steigt als zweites gasförmiges Kältemittel 313 im Wärmerohr 350 nach oben zur zweiten Wärmeübertragerzone 302, wo es kondensiert und als zweites flüssiges Kältemittel 312 durch die Schwerkraft wieder durch das Wärmerohr 350 zurück in den Bereich der ersten Wärmeübertragerzone 301 läuft. Der Kreislauf ist hier in einem einzigen Rohr, nämlich dem Wärmerohr 350 realisiert, in dem das zweite Kältemittel 313 gasförmig aufsteigt und das zweites flüssige Kältemittel 312 flüssig wieder zurückläuft. Dann kann es wieder verdampfen.

Bei einem Verfahren gemäß Figur 2 ist die Menge oder der Zustand des zweiten Kältemittels 312, wie insbesondere ein Druck, so voreingestellt, dass die Wärmeübertragung der Inverterwärme 201, also das Verdampfen des zweiten Kältemittels 312 erst dann erfolgt, wenn eine Mindesttemperatur des Inverters 200 zumindest nahezu erreicht ist.

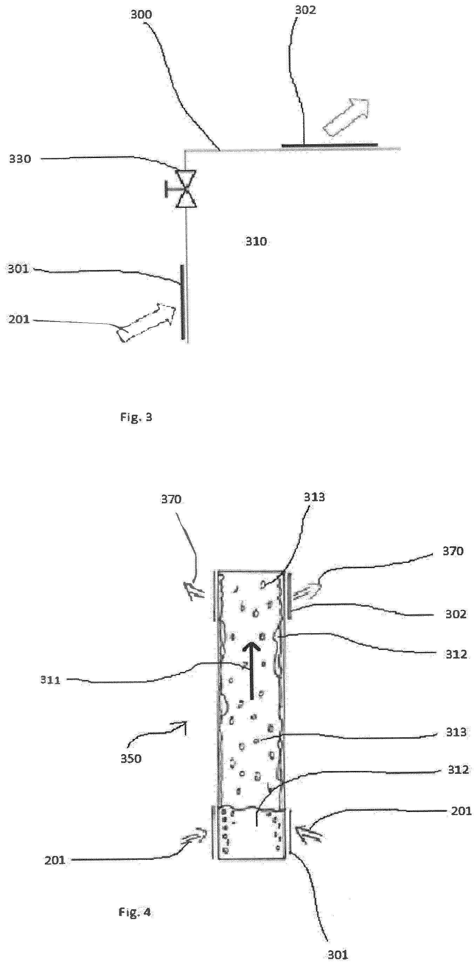

Beim zweiten Kältemittelkreislauf 310 gemäß Ausführungsbeispiel, wie in Figur 3 gezeigt, ist in das Wärmerohr ein Ventil 330 eingebaut, mit dem ein zweiter Massenstrom 311 von insbesondere dem zweiten gasförmigen Kältemittel 313 kontrolliert wird, insbesondere auf die Invertertemperatur, so dass eine Mindesttemperatur nicht unterschritten wird.

Vorteilhaft ist der Kältemittelkreislauf 310 durch ein Rohr mit einem ersten und zweiten Ende ausgestattet wie es in Figur 4 gezeigt ist. Am ersten Ende ist die erste Wärmeübertragerzone 301 und am zweiten Ende die zweite Wärmeübertragerzone 302 angeordnet. Zwischen den beiden Wärmeübertragerzonen 301, 302 fließt das zweite Kältemittel 312, 313. Die erste Wärmeübertragerzone 301 ist unten angeordnet, in der zweites Kältemittel 312 flüssig gesammelt wird. Durch eine Wärmeübertragung von Inverterwärme 201 auf die erste Wärmeübertragerzone 301 wird das zweite flüssige Kältemittel 312 erwärmt, so weit, dass es vorteilhaft ab einer Mindesttemperatur anfängt zu verdampfen, im zweiten Kältemittelkreislauf als gasförmiges zweites Kältemittel 313 nach oben steigt, insbesondere zur zweiten Wärmeübertragerzone 302, wo es durch Kondensation Wärme abgibt. Die Inverterwärme 201 wird als Kondensationswärme 370 wiederum an den Wärmeträgerkreislauf 20 abgegeben und das darin befindliche Wärmeträgerfluid 22 nimmt die vom Inverter 200 abgegebene Wärme auf. Das kondensierte zweite flüssige Kältemittel 312 fließt vorzugsweise an den Innenwandungen 315 des Wärmerohrs 350 herunter, wieder zur ersten Wärmeübertragerzone 301.

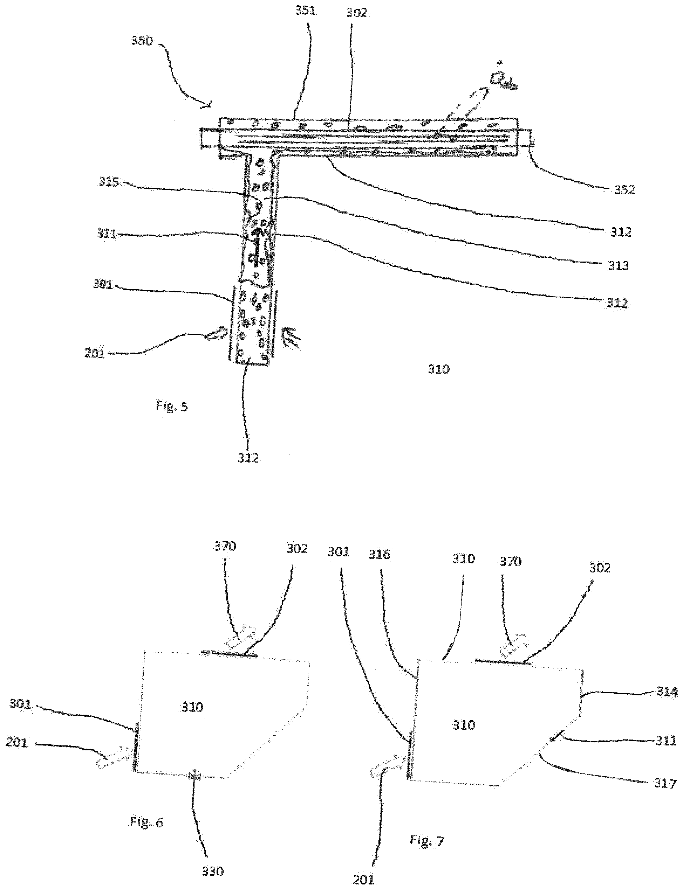

Ein ähnliches Wärmerohr 350 ist in Figur 5 gezeigt, bei dem die zweite Wärmeübertragungszone 302 als Rohr-in-Rohr Wärmeübertrager ausgestattet ist. Ein inneres Rohr 352 ist von einem äußeren Rohr 351 im Bereich der zweiten Wärmeübertragerzone 302 umgeben, so dass das zweite gasförmige Kältemittel 313 zwischen dem inneren Rohr 352 und dem äußeren Rohr 351 strömen kann. Es kondensiert hauptsächlich am inneren Rohr 352, und fließt dann von der zweiten Wärmeübertragerzone 302 wieder zurück zur ersten Wärmeübertragerzone 301, im Wesentlichen durch Schwerkraft bedingt, da zumindest das äußere Rohr 351 schräg geneigt, wie in Fig. 5 gezeigt, ausgebildet ist. Durch das innere Rohr 351 fließt im Inneren das Wärmeträgerfluid 22. Somit wird die Inverterwärme 201 auf das Wärmeträgerfluid 22 übertragen.

In einer Erweiterung oder gemäß einem weiteren vorteilhaften Gedanken der Erfindung strömt das zweite flüssige und gasförmige Kältemittel 312/313 im zweiten Kältemittelkreislauf 310 kreisförmig, insbesondere in einer zweiten Strömungsrichtung 314 um. Daher hat der zweite Kältemittelkreislauf 310, wie in den Figuren 6 und 7 gezeigt einen zweiten Vorlauf 316 und einen zweiten Rücklauf 317. Im zweiten Vorlauf 316 strömt das zweite gasförmige Kältemittel 313, welches durch Inverterwärme 201 in der ersten Wärmeübertragerzone 301 verdampft ist, zur zweiten Wärmeübertragerzone 302, wo es kondensiert. Das zweite gasförmige Kältemittel 313 geht dann in der zweiten Wärmeübertragerzone 302 wieder in eine zweite flüssige Phase über und strömt als zweites flüssiges Kältemittel 312 durch den zweiten Rücklauf 317 zurück zur ersten Wärmeübertragerzone 301.

Weiterhin ist es ein Vorteil im oder am zweiten Kältemittelkreislauf 310 eine Kammer 360 vorzusehen. Diese Kammer 360 ist vorteilhaft in einem zweiten Kältemittelkreislauf 310 mit einem ersten und zweiten Ende vorgesehen. Die Kammer 360 befindet sich vorteilhaft oben an der zweiten Wärmeaustauscherzone 302 oder ist dort angeschlossen. Aber auch in einem kreisförmig geschlossenen zweiten Kältemittelkreislauf 310 mit einem zweiten Vorlauf 316 und einem zweiten Rücklauf 317 ist eine Kammer 360 vorteilhaft angeordnet.

Gemäß einem vorteilhaften Ausführungsbeispiel mit einer Kammer 360 ist es weiterhin vorteilhaft, dass ein drittes Kältemittel 320 im zweiten Wärmeübertrager 300, also dem zweiten Kältemittelkreislauf 310 eingefüllt ist. Das dritte Kältemittel 320 liegt immer, zumindest in den üblichen Betriebszuständen der Wärmepumpe 1 gasförmig vor. Je nach Betriebszustand, oder Temperatur am Inverter 200 wird das zweite Kältemittel 312 mehr oder weniger verdampft. Je heißer der Inverter 200 wird, umso mehr zweites gasförmiges Kältemittel 313 liegt vor. Der Druck erhöht sich mit steigender Temperatur und das zweite gasförmige Kältemittel 313 verdrängt das dritte Kältemittel 320, welches gasförmig vorliegt. Das dritte Kältemittel 320 wird somit mit steigender Temperatur und steigender Verdampfung des zweiten Kältemittels 312 verdichtet und mehr und mehr in die Kammer 360 verdrängt.

Solange das rein gasförmig vorliegende dritte Kältemittel 320 die zweite Wärmeübertragerzone 302 überdeckt kann dort das zweite gasförmige Kältemittel 313 vorteilhaft nicht in Kontakt mit der zweiten Wärmeübertragerzone 302 gelangen. Somit kann das zweite gasförmige Kältemittel 313 nicht in der zweiten Wärmeübertragerzone 302 kondensieren und somit wird keine oder nur geringfügige Inverterwärme 201 oder Kondensationswärme 370 ausgetauscht. In diesem Betriebszustand, wenn insbesondere das dritte Kältemittel 320 noch nicht aus der zweiten Wärmeübertragerzone 302 verdrängt ist, wird der Inverter 200 somit seine Inverterwärme 201 nicht los und kann nicht gekühlt werden. Dies ist in dem Fall auch nicht gewünscht, um die Mindesttemperatur des Inverters 200 nicht zu unterschreiten und ist nicht erforderlich, wenn die Maximaltemperatur des Inverters 200 noch nicht erreicht ist. Steigt nun die Temperatur am Inverter 200, dann wird immer mehr zweites flüssiges Kältemittel 312 verdampft und strömt als zweites gasförmiges Kältemittel 313 weiter nach oben, es verdrängt insbesondere das dritte Kältemittel 320, insbesondere immer mehr in die Kammer 360 hinein. Erreicht das zweite gasförmige Kältemittel 313 die zweite Wärmeübertragerzone 302, dann wird das zweite gasförmige Kältemittel 313 verflüssigt und strömt als zweites flüssiges Kältemittel 312 wieder zur ersten Wärmeübertragerzone 301 zurück und somit fängt die Wärmeübertragung in der zweiten Wärmeübertragerzone 302 an und der Inverter 200 wird gekühlt. Je mehr das zweite gasförmige Kältemittel 313 das dritte Kältemittel 320 verdrängt umso mehr kommt es im Kontakt mit der zweiten Wärmeübertrager 302 und umso mehr Inverterwärme 201 wird am Ende durch Kondensationswärme 370 auf das Wärmeträgerfluid 22 übertragen.

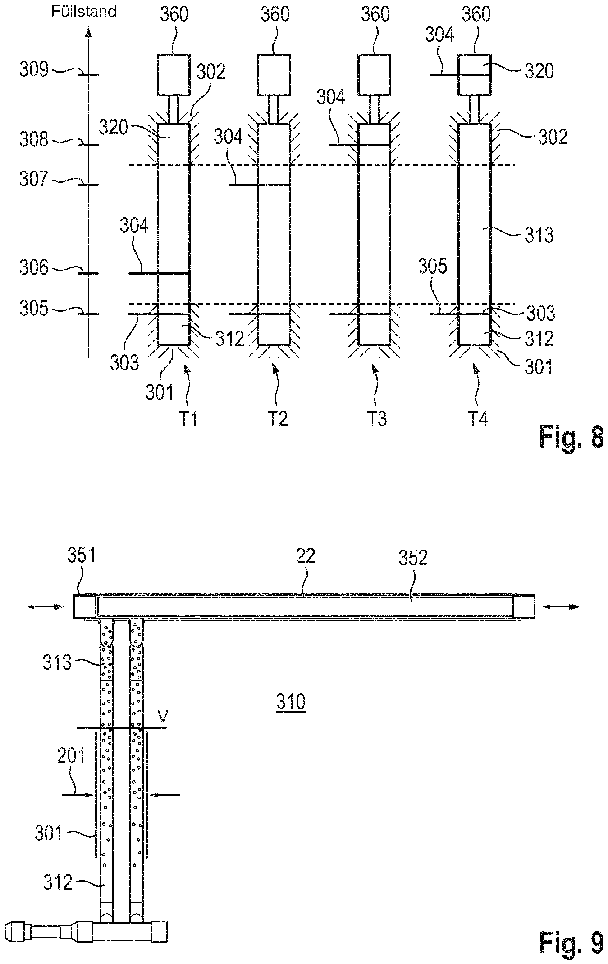

Die Figur 8 zeigt in einem ersten Zustand T1, dass das dritte Kältemittel 320 den Raum des Wärmerohres 350 weitgehend ausfüllt, dass das zweite flüssige Kältemittel 312 die erste Wärmeübertragerzone 301 ausfüllt, wo nur eine ganz geringe oder gar keine Verdampfung stattfindet, so dass das zweite gasförmige Kältemittel 313 nur einen kleinen oder gar keinen Teil des Volumens des Wärmerohrs einnimmt. Der Zustand T2 zeigt, dass schon etwas mehr zweites gasförmiges Kältemittel 313 vorliegt und ein Großteil des dritten Kältemittels 320 bereits in den oberen Bereich des Wärmerohrs 350 und insbesondere in die Kammer 360 gedrückt ist. Das zweite gasförmige Kältemittel 313 hat aber noch keinen Kontakt mit der zweiten Wärmeübertragerzone 302 und es kann noch keine Kondensation vorliegen, sondern höchstens nur ein minimaler Wärmeaustausch, rein durch Konvektion der Gase. Bei T3, wenn die Temperatur des Inverters 200 weiter gestiegen ist, gelangt das zweite gasförmige Kältemittel 313 in die zweite Wärmeübertragerzone 302 und dort kondensiert das zweite gasförmige Kältemittel 313 zum zweiten flüssigen Kältemittel 312 und fließt wieder zur ersten Wärmeübertragerzone 301 zurück. Nun ist der Druck der Kältemittel gestiegen und das dritte Kältemittel 320 ist stark komprimiert und somit ist der Druck im Wärmeübertrager 350 insgesamt gestiegen. T4 zeigt einen Zustand, in dem das zweite gasförmige Kältemittel 313 das dritte Kältemittel 320 vollständig in die Kammer zurückgedrückt hat und, was wichtig ist, damit zweite gasförmige Kältemittel 313 vollständig in Kontakt mit der zweiten Wärmeübertragerzone 302 gelangt, dort kondensiert und so ein guter Wärmeaustausch stattfindet, womit der Inverter 200 letztlich gut gekühlt wird, da sehr viel zweites flüssiges Kältemittel 312 verdampft und wieder kondensiert.

Hingewiesen wird noch darauf, dass das gasförmige dritte Kältemittel 320 vorteilhaft eine geringere Dichte aufweist als das zweite gasförmige Kältemittel 313, die Stoffe sollen sich nicht oder nur wenig durchmischen.

In der Reihenfolge der Betrachtung vom Zustand T1 zu T2 zu T3 und zu T4 fällt ein erstes Level 305 des zweiten flüssigen Kältemittels 312 langsam ab, da bei T4 am meisten zweites flüssiges Kältemittel 312 zu zweitem gasförmige Kältemittel 313 verdampft ist. Damit steigt das Volumen des zweiten gasförmigen Kältemittels 313 betrachtet von T1 bis T4 von einem zweiten Level 306, über ein drittes Level 307, ein viertes Level 308, bis zu einem fünften Level 309 an. Die Levels 306, 307, 308 und 309 sind jeweils durch eine Stoffgrenze 304 zwischen dem zweiten gasförmigen Kältemittel 313 und dem dritten Kältemittel 320, welches auch gasförmig vorliegt, bedingt.

Figur 9 zeigt die Variation eines Ausführungsbeispiels des zweiten Kältemittelkreislauf 310, wobei ein Wärmerohr 350 durch zwei Rohre gebildet ist, mit denen die erste Wärmeübertragerzone 301 mit der zweiten Wärmeübertragerzone 302 verbunden ist. Die zweite Wärmeübertragerzone 302 ist durch ein äußeres Rohr 351 und durch ein inneres Rohr 352 gebildet, wobei das zweite gasförmige Kältemittel 313 zwischen dem inneren Rohr 352 und 351 strömt, kondensiert und als zweites flüssiges Kältemittel 312 wieder zur ersten Wärmeübertragerzone 301 zurückfließt. Durch das innere Rohr 352 fließt Wärmeträgerfluid 22.

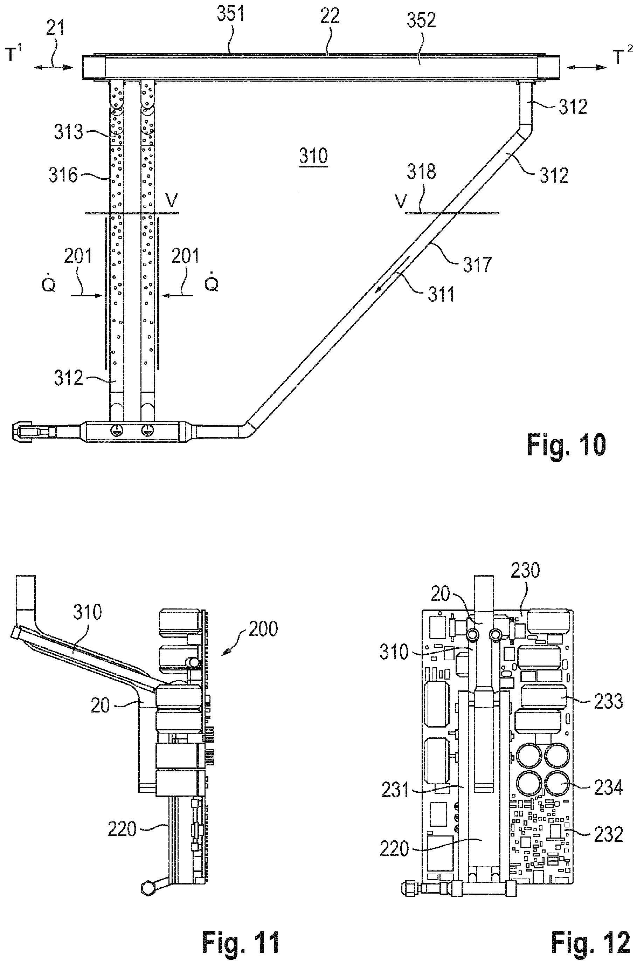

Gegenüber Figur 9 zeigt Figur 10 einen geschlossenen zweiten Kältemittelkreislaufs 310, bei dem ein zweiter Vorlauf 316 durch zwei Rohre gebildet ist und ein Rücklauf 317, für insbesondere zweites flüssiges Kältemittel 312, den Kreislauf schließt. Gezeigt ist weiterhin ein Füllstand 318, bis zudem das zweite Kältemittel 312 im gezeigten Fall flüssig vorliegt.

Figur 11 und Figur 12 zeigen, wie die Anbindung der zweiten Wärmeübertragerzone 302 des zweiten Kältemittelkreislauf 310 an den Inverter 200 erfolgt. Ein Kühlkörper 220 liegt an den Leistungsschaltern 231, insbesondere elektronische Leistungsschalter wie IGBTs oder Thyristoren, an. An einer anderen Stelle wird der zweite Kältemittelkreislauf mit dem Kühlkörper 220 kontaktiert, so dass die Inverterwärme 201 von den elektronischen Leistungsschaltern 231 durch den Kühlkörper 220 zum zweiten Kältemittelkreislauf 310 strömen kann und dann zum Wärmeträgerkreislauf 20 ins Wärmeträgerfluid 22.

Die elektronischen Leistungsschalter 231 sind auf der Platine 230, wie andere elektronischen Bauelemente 232, Spulen 233 und Kondensatoren 234 angebracht. Durch die Anordnung des Kühlkörpers 220 an oder im Bereich der Platine 230 werden die anderen elektronischen oder elektrischen Bauteile und Bauelemente 232 ebenfalls gekühlt.

Eine Inverter Platine 230 des Inverters 200 weist elektronische Leistungsschalter 231 auf, insbesondere IGBTs, die mit den zweiten Wärmeübertrager 300 gekühlt werden. Weiterhin sind auf der Platine 230 Kondensatoren, Spulen und andere elektronischen oder elektrotechnische Bauelemente 232 enthalten.

Die erste Wärmeübertragerzone 301 ist mit einer Klemmplatte 221, wie einem Blech oder Kühlblock vorzugsweise aus Metall an einem Kühlkörper aus einem wärmeleitenden Material, wie insbesondere Aluminium, Kupfer oder einem anderen Metall, befestigt. Die elektronischen Leistungsschalter 231 sind an die Kühlkörper 220 gedrückt. Der Kühlkörper 220 ist vorteilhaft an die Platine 230 geschraubt.

Vorteilhaft ist die erste Wärmeübertragerzone 301 direkt auf die Leistungsschalter 231 gedrückt.

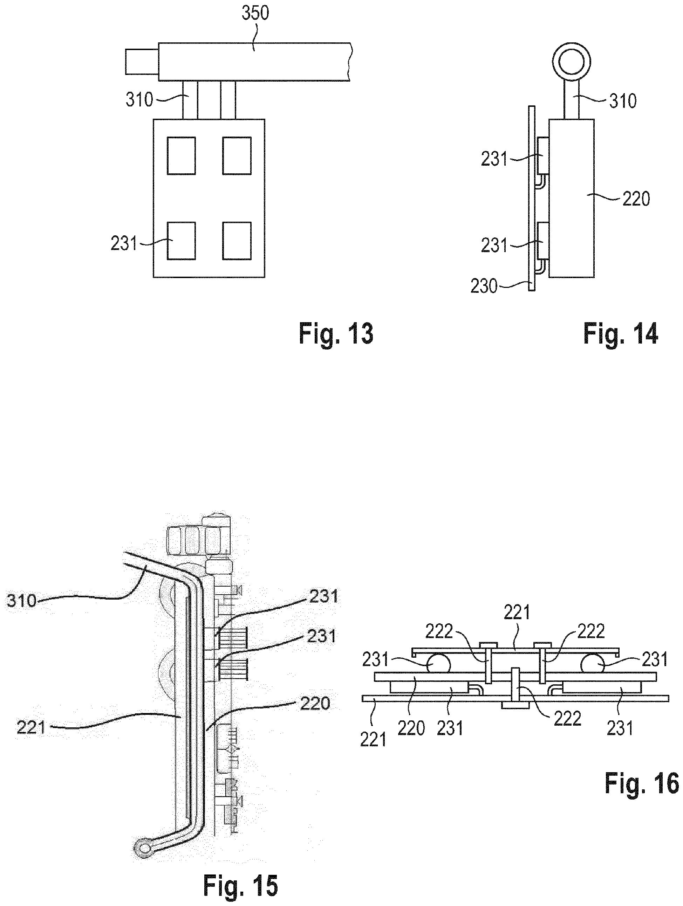

Die Figuren 13 und 14 zeigen die Anordnung der elektronischen Leistungsschalter 231 auf der Platine 230. Die Leistungsschalter sind an einen Kühlkörper 220 gepresst, der weiterhin in wärmeleitendem Kontakt mit dem zweiten Kältemittelkreislauf 310 liegt. Figur 13 zeigt weiterhin, dass der zweite Kältemittelkreislauf 310 ein Wärmerohr 350 aufweist.

Figur 15 zeigt einen Inverter 200 mit einem zweiten Wärmeübertrager 300. Der zweite Kältemittelkreislauf 310 ist mit einer Klemmplatte 221 an den Kühlkörper 220 gepresst. Elektronische Leistungsschalter 231 liegen am Kühlkörper 220 an.

Figur 16 zeigt eine Sandwichbauweise, bei der die elektronischen Leistungsschalter 231 zwischen einer Klemmplatte 221 oder der Platine 230 und dem Kühlkörper 220 gehalten, bzw. gepresst sind. Die Leistungsschalter 231 liegen insbesondere am Kühlkörper 220 an. Auf einer anderen Seite des Kühlkörpers 220 liegt die erste Wärmeübertragerzone 301, die mit einer weiteren Klemmplatte 221 mittels zweier Klemmelement 222 gegen den Kühlkörper 220 gepresst werden. Somit erfolgt eine Übertragung der Inverterwärme 201 von den elektronischen Leistungsschaltern 231 auf den Kühlkörper 220 und von dort auf die erste Wärmeübertragerzone 231.

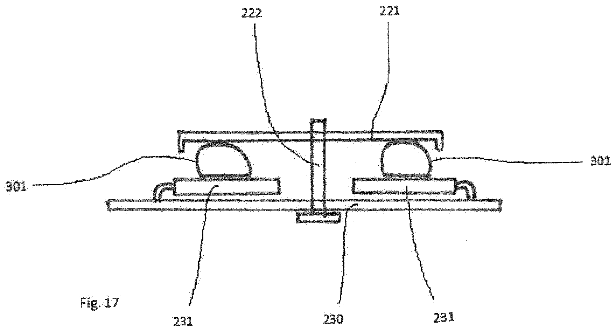

In Figur 17 ist eine Sandwichbauweise gezeigt, bei der die erste Wärmeübertragerzone 301 direkt an den elektronischen Leistungsschalter 231 anliegt, sodass kein Kühlkörper zwischengeschaltet ist. Die Wärme, insbesondere die Inverterwärme 201 wird direkt von den elektronischen Leistungsschalter 231 auf die erste Wärmeübertragerzone 301 übertragen. Mit einem Klemmelement 222 wird die erste Wärmeübertragerzone auf die elektronischen Leistungsschalter 231 gedrückt.

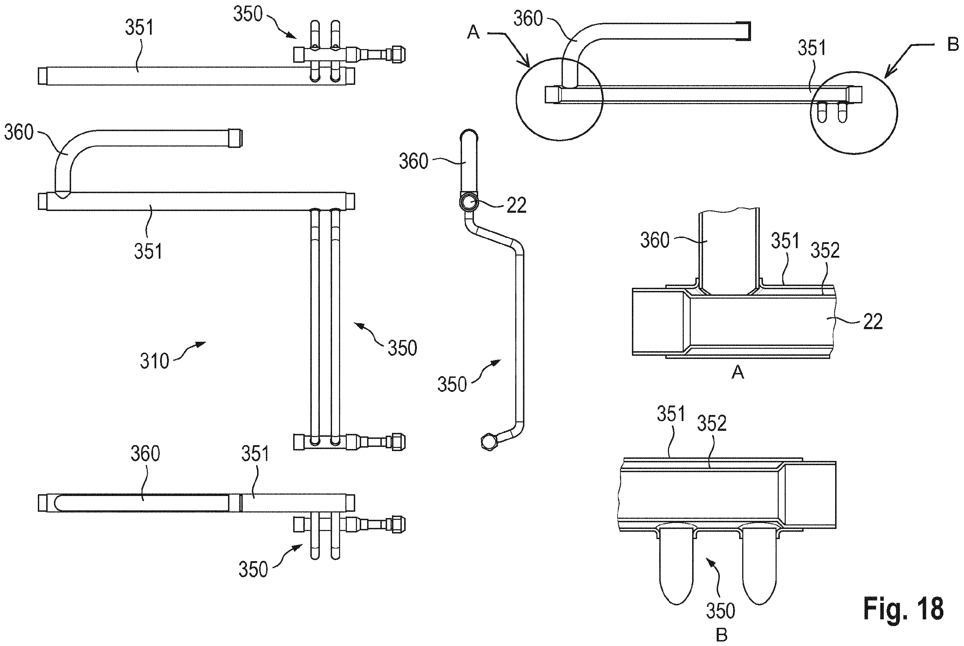

Fig. 18 zeigt schematisch und exemplarisch verschiedene Ansichten eines zweiten Kältemittelkreislaufs 310 mit zweiter Wärmeübertragerzone 302, die als Rohr-in-Rohr Wärmeübertrager ausgebildet ist, ähnlich zu dem zweiten Kältemittelkreislauf 310, der in Fig. 9 gezeigt ist. Insbesondere ist demnach ein aus zwei Rohren gebildetes Wärmerohr 350 ausgeführt und die zweite Wärmeübertragerzone 302 ist durch das äußere Rohr 351 und das innere Rohr 352 gebildet.

Zusätzlich weist der zweite Kältemittelkreislauf 310 der Fig. 18 einen als Rohr ausgestalteten Behälter 360 auf, der beispielsweise mit Verweis auf Fig. 8 beschrieben wurde. Der Behälter 360 in Fig. 9 ist demnach als Rohr ausgestaltet und erstreckt sich nach oben von und steht in Fluidverbindung mit dem äußeren Rohr 351. Der Behälter 360 ist vorzugsweise dazu eingerichtet, gasförmiges drittes Kältemittel 320 aufzunehmen, um eine Kühlung des Inverters hinauszuzögern, bis der Inverter seinen bevorzugten Betriebstemperaturbereich erreicht hat, wie bereits mit Verweis auf Fig. 8 beschrieben ist.

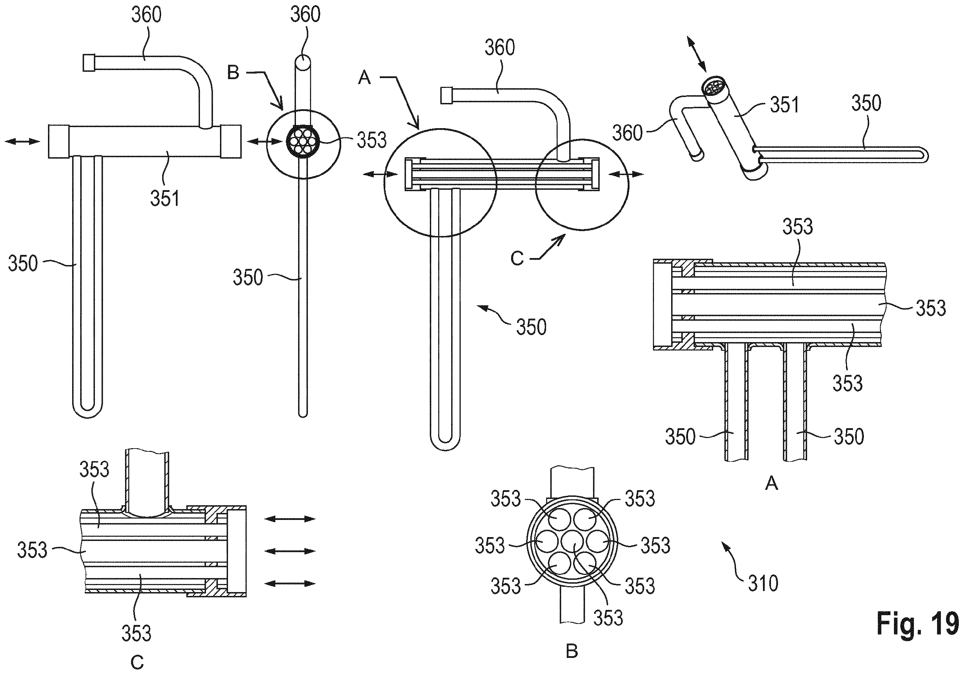

Fig. 19 zeigt mehrere schematische und exemplarische Ansichten eines zweiten Kältemittelkreislaufs 310, der im Kern dem Ausführungseispiel der Fig. 18 entspricht, das heißt den Fall, bei dem ein Behälter 360 zur Aufnahme gasförmigen Kältemittels ausgebildet ist, um die Wärmeabgabe durch das zweite gasförmige Kältemittel 313 in der zweiten Wärmeübertragerzone 302 hinauszuzögern. Im Unterschied zu dem zweiten Kältemittelkreislauf 310 der Fig. 18 ist die zweite Wärmeübertragerzone 302 nicht als Rohr-in-Rohr-Wärmeübertrager sondern als Bündelwärmeübertrager ausgebildet. Innerhalb des äußeren Rohrs 351, in dem das gasförmige und dann kondensierte zweite Kältemittel 313, 312 fließt, sind mehrere einzelne Rohre 353 ausgebildet, durch die das Wärmeträgerfluid 22 strömt. Die mehreren einzelnen Rohre 353, die auch als Rohrbündel bezeichnet werden, vergrößern die Oberfläche und damit den Wärmeaustausch zwischen zweitem Kältemittel und Wärmeträgerfluid.

In diesem Beispiel sind sieben einzelne Rohre 353 vorgesehen, wobei eines der Rohre mittig angeordnet und die weiteren der Rohre 353 um das mittlere Rohr herum gleichmäßig verteilt angeordnet sind. Die Durchmesser der einzelnen Rohre 353 sind in diesem Beispiel gleich. Es sollte beachtet werden, dass auch eine größere oder kleinere Zahl einzelner Rohre 353 vorgesehen sein kann und dass auch die Durchmesser der einzelnen Rohre 353 unterschiedlich sein können. Auch sind nicht kreisrunde Querschnitte eines oder sämtlicher der einzelnen Rohre 353 vorstellbar. Ferner sollte beachtet werden, dass die Verwendung eines Bündelwärmeübertragers, wie er in Fig. 19 gezeigt ist, auch ohne einen Behälter 360 vorteilhaft ist.

| | | | |
|---|---|---|---|
| 1 | Wärmepumpe Parameter der Wärmepumpe | 303 | Zustandsgrenze Phasengrenze |
| | Betriebszustand | 304 | Stoffgrenze |
| | Heizbetriebsart | 305 | Erstes Level |
| | Kühlbetriebsart | | |
| | Leistungsaufnahme der | 306 | Zweites Level |
| | Wärmepumpe | 307 | Drittes Level |
| 10 | Kältemaschine | 308 | Viertes Level |
| 20 | Wärmeträgerkreislauf | 309 | Fünftes Level |
| 21 | Fluidrichtung | 310 | zweiter Kältemittelkreislauf |
| 22 | Wärmeträgerfluid | 311 | zweiter Massenstrom |
| 100 | erster Kältemittelkreislauf | 312 | zweites flüssiges Kältemittel |
| 101 | erste Massenstromrichtung erstes Kältemittel | 313 | zweites gasförmiges Kältemittel |
| 110 | Verdichter Drehzahl am Verdichter | 314 | zweite Strömungsrichtung |
| | | 315 | Innenwandung |
| 120 | erster Wärmeübertrager | 316 | zweiter Vorlauf |
| 130 | Verdampfer | 317 | zweiter Rücklauf |
| 140 | Expansionsventil | | Druck des zweiten Kältemittels Starttemperatur |
| **200** | **Inverter** | | |
| 201 | Inverterwärme | 318 | Füllstand |
| | Maß der Inverterwärme | | |
| | Invertertemperatur | | |
| | Maximaltermperatur | 320 | Drittes Kältemittel |
| | Mindesttemperatur | | Dritte Temperatur |
| 220 | Kühlkörper | 330 | Ventil |
| 221 | Klemmplatte | | Öffnungsgrad |
| 222 | Klemmelement | 340 | Thermosiphon |
| 223 | zweite Klemmplatte | 350 | Wärmerohr |
| | | | Querschnitt des Wärmerohres |
| 230 | Platine | | |
| 231 | Leistungsschalter (elektron. wie IGBTs) | 351 | äußeres Rohr |
| 232 | Bauelemente (elektron. elektri.) | 352 | inneres Rohr |
| 233 | Spulen | 353 | einzelne Rohre565 |
| 234 | Kondensatoren | 360 | Kammer |
| **300** | **zweiter Wärmeübertrager** | 370 | Kondensationswärme |
| 301 | erste Wärmeübertragerzone | T1 | erster Zustand |
| 302 | zweite Wärmeübertragerzone | T2 | zweiter zustand |
| | Übertragungsflächen | | |
| | Verdampferfläche | T3 | dritter Zustand |
| | Rippen als Übertragungsflächen | | |
| | Kondensationsfläche der zweiten | T4 | vierter Zustand |
| | Wärmeübertragerzone | | |

## Patentansprüche

1. Verfahren zum Betrieb einer Wärmepumpe (1) in zumindest einer Heizbetriebsart, wobei Wärme zwischen einem ersten Kältemittel (101) und einem Wärmeträgerfluid (22) übertragen wird, wobei das erste Kältemittel (101) mit einem Verdichter (110) in einem ersten Kältemittelkreislauf (100) umgetrieben wird, ein erster Massenstrom (101) des ersten Kältemittels (101) durch den ersten Kältemittelkreislauf (100) durch eine Einstellung einer Drehzahl am Verdichter (110) mit einem Inverter (200) geregelt wird,
enthaltend den Verfahrensschritt,
dass Inverterwärme (201), die durch elektrische Verluste im Inverter (200) entstehen, auf das Wärmeträgerfluid (22) abgegeben wird, wobei
die Inverterwärme (201) in einem zweiten Kältemittelkreislauf (300) auf ein zweites Kältemittel (312) zur Kühlung des Inverters (200) übertragen wird und das zweite Kältemittel (312, 313) die Inverterwärme (201) an das Wärmeträgerfluid (22) abgibt, wobei
ein Maß der Inverterwärme (201), die vom Inverter (200) auf das zweite Kältemittel (312) übertragen wird auf eine Mindesttemperatur des Inverters (200) abgestimmt ist, ein zweiter Massenstrom (311) des zweiten Kältemittels (312, 313) so weit reduziert wird, dass die Mindesttemperatur nicht unterschritten wird und
dass das Maß der Inverterwärme (201) so abgestimmt ist, dass der Inverter (200) eine Maximaltemperatur nicht erreicht oder nicht überschreitet, wozu der Massenstrom (311) so weit erhöht ist, dass die Maximaltemperatur nicht überschritten wird,
**dadurch gekennzeichnet, dass** das Maß der Inverterwärme (201) abhängig von einem am Inverter (200) vorliegenden Betriebszustand ist, wobei ein zweiter Massenstrom (311) des zweiten Kältemittels (312, 313) über einen Öffnungsgrad eines Ventils (330) im zweiten Kältemittelkreislauf (310) abhängig vom Betriebszustand gesteuert wird.

2. Verfahren nach Anspruch 1, enthaltend den Verfahrensschritt, dass der Druck des zweiten Kältemittels (312, 313) im zweiten Kältemittelkreislauf (310) so gewählt wird, dass eine Starttemperatur der Verdampfung des zweiten Kältemittels (312) etwa bei der Mindesttemperatur liegt.

3. Verfahren nach Anspruch 1 oder 2, enthaltend den Verfahrensschritt, dass sich der Betriebszustand auf einen Parameter der Wärmepumpe (1) bezieht, der einen Einfluss auf eine Temperatur des Inverters (200) hat, so dass bei einer steigenden Leistungsaufnahme der Wärmepumpe (1), insbesondere des Verdichters (110), der Öffnungsgrad des Ventils (330) erhöht wird, wodurch der zweite Massenstrom (311) des zweiten Kältemittels (312, 313) erhöht ist und somit das Maß der Inverterwärme (201), die auf das zweite Kältemittel (312, 313) übertragen wird steigt, wodurch der Inverter (200) stärker gekühlt ist.

4. Verfahren nach einem der vorhergehenden Ansprüche, enthaltend den Verfahrensschritt, dass eine Invertertemperatur als Parameter für die Inverterwärme (201) ermittelt wird, der zweite Massenstrom (311) vom zweiten Kältemittel (312, 313) erhöht wird, wenn die Invertertemperatur steigt, wodurch die Invertertemperatur nicht über die Maximaltemperatur hinaus steigt und der Massenstrom (311) stark gedrosselt oder ganz gesperrt wird, das Ventil (330) somit nahezu geschlossen oder ganz geschlossen wird, wenn der Inverter (200) zu kalt wird, was spätestens dann erfolgt, wenn die Mindesttemperatur erreicht oder unterschritten wird.

5. Verfahren nach einem der vorhergehenden Ansprüche, enthaltend den Verfahrensschritt, dass ein drittes Kältemittel (320) im zweiten Kältemittelkreislauf (310) eingefüllt ist, das dritte Kältemittel (320) im zweiten Kältemittelkreislauf (310) in den Betriebszuständen der Wärmepumpe (1) gasförmig ist und das dritte Kältemittel (320) ab einer dritten Temperatur vom zweiten gasförmigen Kältemittel (313) in eine Kammer (360) verdrängt wird, wodurch das zweite Kältemittel (312, 313) in eine zweite Wärmeübertragerzone (302) des zweiten Kältemittelkreislaufs (310) gelangt, wo es kondensiert.

6. Kältemaschine (10), insbesondere Wärmepumpe (1), mit einem Vorlaufanschluss (24) und einem Rücklaufanschluss (23), zumindest zum Heizen nach einem der vorhergehenden Ansprüche 1 bis 5 ausgebildet, mit einem ersten Wärmeübertrager (120) zwischen einem ersten Kältemittelkreislauf (100) und einem Wärmeträgerkreislauf (20),
wobei im ersten Kältemittelkreislauf (100) ein drehzahlgeregelter Verdichter (110) angeordnet ist, der elektrisch mit einem Inverter (200) verbunden ist, von dem der Verdichter (110) gesteuert wird,
und der Inverter (200) mit einem zweiten Kältemittelkreislauf (310) verbunden ist, in dem ein zweites Kältemittel (312, 313) enthalten ist, und der zweite Kältemittelkreislauf (310) mit dem Wärmeträgerkeislauf (20) verbunden ist.

7. Kältemaschine (10) nach Anspruch 6, wobei der zweite Kältemittelkreislauf (310) ein Wärmerohr (350) mit dem zweiten flüssigen Kältemittel (312) und/oder gasförmigen Kältemittels (313) zur Übertragung der Inverterwärme (201) auf das Wärmeträgerfluid (22) aufweist.

8. Kältemaschine (10) nach Anspruch 6 oder 7, **dadurch gekennzeichnet, dass** der zweite Kältemittelkreislauf (310) eine erste Wärmeübertragerzone (301) aufweist, die als Verdampfer mit dem Inverter (200) zur Wärmeübertragung insbesondere von Inverterwärme (201) verbunden ist und eine zweite Wärmeübertragerzone (302) als Verflüssiger zur Übertragung von Kondensationswärme (370) aufweist, die mit dem Wärmeträgerkreislauf (20) verbunden ist.

9. Wärmepumpe (1) enthaltend eine Kältemaschine (10), einen Wärmeträgerkreislauf (20) sowie einen ersten Kältemittelkreislauf (100), wobei die Wärmepumpe (1) zum Betrieb nach einem der vorhergehenden Ansprüche 1 bis 5 ausgebildet ist, umfassend
zumindest einen Vorlaufanschluss (24) und einen Rücklaufanschluss (23), wobei das Wärmeträgermedium in eine Fluidrichtung (21), durch den Wärmeträgerkreislauf (20) strömen kann, wobei
die Fluidrichtung (21) wechseln kann, wobei
der erste Kältemittelkreislauf (100) mit einem ersten Kältemittel (101) befüllt ist, welches in eine erste Massenstromrichtung (101) von einem Verdichter (110) umgetrieben werden kann, wobei der Massenstrom des ersten Kältemittels (101) sich im Wesentlichen durch die Verdichterleistung und aber auch durch eine Stellung eines Expansionsventils (140) ergibt, wobei das erste Kältemittel (101) weiterhin durch einen Verdampfer (130) und einen ersten Wärmeübertrager (120), der im Heizbetrieb als Verflüssiger arbeitet, umgetrieben wird, wobei die Kältemaschine (10) über den ersten Wärmeübertrager (120) an den Wärmeträgerkreislauf (20) thermisch gekoppelt ist und weiterhin
eine zweite Wärmeübertragerzone (302) mit dem Wärmeträgerkreislauf (20) thermisch gekoppelt ist und
der zweite Wärmeübertrager (300) zur kontrollierten Wärmeübertragung von Inverterwärme (201) auf den Wärmeträgerkreislauf (20) vorgesehen ist.

## Claims

1. Method for operating a heat pump (1) in at least one heating mode, wherein heat is transferred between a first refrigerant (101) and a heat transfer fluid (22), wherein the first refrigerant (101) is circulated by a compressor (110) in a first refrigerant circuit (100), a first mass flow (101) of the first refrigerant (101) through the first refrigerant circuit (100) is controlled by adjusting a speed on the compressor (110) with an inverter (200),
including the method step
that inverter heat (201), generated by electrical losses in the inverter (200), is transferred to the heat transfer fluid (22), wherein
the inverter heat (201) in a second refrigerant circuit (300) is transferred to a second refrigerant (312) for cooling the inverter (200) and the second refrigerant (312, 313) delivers the inverter heat (201) to the heat transfer fluid (22), wherein
an amount of the inverter heat (201), which is transferred from the inverter (200) to the second refrigerant (312), is matched to a minimum temperature of the inverter (200), a second mass flow (311) of the second refrigerant (312, 313) is reduced to the extent that the temperature does not fall below the minimum temperature and
the amount of the inverter heat (201) is matched such that the inverter (200) does not reach or exceed a maximum temperature, for which purpose the mass flow (311) is increased to the extent that the maximum temperature is not exceeded,
**characterised in that** the amount of the inverter heat (201) is dependent on an operating status at the inverter (200), wherein a second mass flow (311) of the second refrigerant (312, 313) is controlled via an opening degree of a valve (330) in the second refrigerant circuit (310) as a function of the operating state.

2. Method according to claim 1, including the method step that the pressure of the second refrigerant (312, 313) in the second refrigerant circuit (310) is selected such that a starting temperature of the evaporation of the second refrigerant (312) is approximately at the level of the minimum temperature.

3. Method according to claim 1 or 2, including the method step that the operating status relates to a parameter of the heat pump (1), that has an influence on a temperature of the inverter (200), such that with an increasing power consumption of the heat pump (1), in particular of the compressor (110), the degree of opening of the valve (330) is increased, whereby the second mass flow (311) of the second refrigerant (312, 313) is increased and thus the amount of inverter heat (201) transferred to the second refrigerant (312, 313) increases, whereby the inverter (200) is cooled more strongly.

4. Method according to any one of the preceding claims, including the method step of determining an inverter temperature as a parameter for the inverter heat (201), increasing the second mass flow (311) of the second refrigerant (312, 313) when the inverter temperature rises, whereby the inverter temperature does not rise above the maximum temperature and the mass flow (311) is strongly restricted or completely blocked, the valve (330) thus being almost closed or completely closed when the inverter (200) is too cold, which occurs at the latest when the minimum temperature is reached or undershot.

5. Method according to any one of the preceding claims, including the method step that the second refrigerant circuit (310) is filled with a third refrigerant (320), the third refrigerant (320) in the second refrigerant circuit (310) is gaseous in the operating states of the heat pump (1) and from a third temperature the third refrigerant (320) is displaced by the second gaseous refrigerant (313) into a chamber (360), whereby the second refrigerant (312, 313) enters a second heat transfer zone (302) of the second refrigerant circuit (310), where it condenses.

6. Refrigerating machine (10), in particular heat pump (1), with a flow connection (24) and a return connection (23), configured at least for heating according to any one of the preceding claims 1 to 5, with a first heat exchanger (120) between a first refrigerant circuit (100) and a heat transfer circuit (20),
wherein in the first refrigerant circuit (100) a speed-controlled compressor (110) is arranged which is connected electrically to an inverter (200) by which the compressor (110) is controlled,
and the inverter (200) is connected to a second refrigerant circuit (310), containing a second refrigerant (312, 313), and the second refrigerant circuit (310) is connected to the heat transfer circuit (20).

7. Refrigerating machine (10) according to claim 6, wherein the second refrigerant circuit (310) comprises a heat pipe (350) with the second liquid refrigerant (312) and/or gaseous refrigerant (313) for transferring the inverter heat (201) to the heat transfer fluid (22).

8. Refrigerating machine (10) according to claim 6 or 7, **characterised in that** the second refrigerant circuit (310) has a first heat exchanger zone (301), which is connected as an evaporator to the inverter (200) for transferring heat, in particular inverter heat (201), and has a second heat exchanger zone (302) as a condenser for transferring condensation heat (370), which is connected to the heat transfer circuit (20).

9. Heat pump (1) including a refrigerating machine (10), a heat transfer circuit (20) and a first refrigerant circuit (100), wherein the heat pump (1) is configured for operation according to any one of the preceding claims 1 to 5, comprising
at least one flow connection (24) and one return connection (23), wherein the heat transfer medium can flow in a fluid direction (21) through the heat transfer circuit (20), wherein
the fluid direction (21) can change, wherein
the first refrigerant circuit (100) is filled with a first refrigerant (101), which can be circulated in a first mass flow direction (101) by a compressor (110), wherein
the mass flow of the first refrigerant (101) is determined essentially by the compressor capacity and also by a position of an expansion valve (140), wherein
the first refrigerant (101) is circulated further by an evaporator (130) and a first heat exchanger (120), which operates as a condenser in heating mode, wherein the refrigerating machine (10) is thermally coupled to the heat transfer circuit (20) via the first heat exchanger (120) and furthermore
a second heat exchanger zone (302) is thermally coupled to the heat transfer circuit (20) and
the second exchanger (300) is provided for the controlled heat transfer of inverter heat (201) to the heat transfer circuit (20).

## Revendications

1. Procédé de fonctionnement d'une pompe à chaleur (1) sous au moins un mode de chauffage, dans lequel de la chaleur est transmise entre un premier fluide frigorigène (101) et un fluide caloporteur (22), le premier fluide frigorigène (101) circulant dans un premier circuit frigorifique (100) au moyen d'un compresseur (110), un premier débit massique (101) du premier fluide frigorigène (101) dans le premier circuit frigorifique (100) étant régulé par un réglage du régime du compresseur (110) au moyen d'un inverter (200),
comportant l'étape de procédé
selon laquelle de la chaleur de l'inverter (201), qui est produite par des pertes électriques dans l'inverter (200), est transférée au fluide caloporteur (22), étant entendu que
la chaleur de l'inverter (201) est transmise dans un deuxième circuit frigorifique (300) à un deuxième fluide frigorigène (312) pour refroidir l'inverter (200) et le deuxième fluide frigorigène (312, 313) transfère la chaleur de l'inverter (201) au fluide caloporteur (22), et que
une quantité de chaleur de l'inverter (201) qui est transmise de l'inverter (200) au deuxième fluide frigorigène (312) est adaptée à une température minimale de l'inverter (200), un deuxième débit massique (311) du deuxième fluide frigorigène (312, 313) est réduit de façon à ne pas passer en dessous de la température minimale, et
selon laquelle la quantité de chaleur de l'inverter (201) est adaptée de telle manière que l'inverter (200) n'atteint pas ou ne dépasse pas une température maximale, le débit massique (311) subissant alors une augmentation assurant que la température maximale ne soit pas dépassée,
**caractérisé en ce que** la quantité de chaleur de l'inverter (201) est dépendante d'un état de fonctionnement propre à l'inverter (200), un deuxième débit massique (311) du deuxième fluide frigorigène (312, 313) étant commandé en fonction de cet état de fonctionnement par le biais du degré d'ouverture d'une vanne (330) située dans le deuxième circuit frigorifique (310).

2. Procédé selon la revendication 1, comportant l'étape de procédé selon laquelle la pression du deuxième fluide frigorigène (312, 313) dans le deuxième circuit frigorifique (310) est sélectionnée de telle manière qu'une température de départ de l'évaporation du deuxième fluide frigorigène (312) correspond approximativement à la température minimale.

3. Procédé selon la revendication 1 ou 2, comportant l'étape de procédé selon laquelle l'état de fonctionnement se rapporte à un paramètre de la pompe à chaleur (1) influant sur la température de l'inverter (200), de telle façon que, lorsque la puissance absorbée de la pompe à chaleur (1), en particulier du compresseur (110), augmente, le degré d'ouverture de la vanne (330) s'accroît, moyennant quoi le deuxième débit massique (311) du deuxième fluide frigorigène (312, 313) s'accroît, et ainsi la quantité de chaleur de l'inverter (201) qui est transmise au deuxième fluide frigorigène (312, 313) augmente, moyennant quoi l'inverter (200) est plus intensément refroidi.

4. Procédé selon l'une quelconque des revendications précédentes, comportant l'étape de procédé selon laquelle la température de l'inverter est déterminée comme paramètre relatif à la chaleur de l'inverter (201), le deuxième débit massique (311) du deuxième fluide frigorigène (312, 313) s'accroît quand la température de l'inverter augmente, moyennant quoi la température de l'inverter n'augmente pas au-delà de la température maximale, et le débit massique (311) est fortement restreint ou complètement bloqué, la vanne (330) étant ainsi presque fermée ou complètement fermée quand l'inverter (200) est trop froid, ce qui se produit au plus tard quand la température minimale est atteinte ou que la température passe en dessous de celle-ci.

5. Procédé selon l'une quelconque des revendications précédentes, comportant l'étape de procédé selon laquelle un troisième fluide frigorigène (320) est présent dans le deuxième circuit frigorifique (310), le troisième fluide frigorigène (320) du deuxième circuit frigorifique (310) est à l'état gazeux dans les états de fonctionnement de la pompe à chaleur (1) et, à partir d'une troisième température, le troisième fluide frigorigène (320) est refoulé dans une chambre (360) par le deuxième fluide frigorigène (313) à l'état gazeux, moyennant quoi le deuxième fluide frigorigène (312, 313) pénètre dans une deuxième zone d'échangeur de chaleur (302) du deuxième circuit frigorifique (310), dans laquelle il se condense.

6. Machine frigorifique (10), en particulier pompe à chaleur (1), dotée d'un raccord de départ (24) et d'un raccord de retour (23), conçue au moins pour le chauffage selon l'une des revendications 1 à 5, dotée d'un premier échangeur de chaleur (120) entre un premier circuit frigorifique (100) et un circuit de fluide caloporteur (20),
dans laquelle un compresseur (110) à régime régulé est disposé dans le premier circuit frigorifique (100), ledit compresseur étant relié électriquement à un inverter (200) permettant de commander le compresseur (110),
et l'inverter (200) est relié à un deuxième circuit frigorifique (310) dans lequel se trouve un deuxième fluide frigorigène (312, 313), et le deuxième circuit frigorifique (310) est relié au circuit de fluide caloporteur (20).

7. Machine frigorifique (10) selon la revendication 6, dans laquelle le deuxième circuit frigorifique (310) présente un tube échangeur de chaleur (350) comportant le deuxième fluide frigorigène liquide (312) et/ou fluide frigorigène gazeux (313) pour transmettre la chaleur de l'inverter (201) au fluide caloporteur (22).

8. Machine frigorifique (10) selon la revendication 6 ou 7, **caractérisée en ce que** le deuxième circuit frigorifique (310) présente une première zone d'échangeur de chaleur (301) qui, sous la forme d'un évaporateur, est reliée à l'inverter (200) pour la transmission de chaleur, en particulier de chaleur de l'inverter (201), et présente une deuxième zone d'échangeur de chaleur (302) sous la forme d'un condenseur pour la transmission de la chaleur de condensation (370), qui est reliée au circuit de fluide caloporteur (20).

9. Pompe à chaleur (1) comportant une machine frigorifique (10), un circuit de fluide caloporteur (20) ainsi qu'un premier circuit frigorifique (100), la pompe à chaleur (1) étant conçue pour fonctionner selon l'une des revendications précédentes 1 à 5, comprenant
au moins un raccord de départ (24) et un raccord de retour (23), le fluide caloporteur pouvant circuler dans une direction (21) dans le circuit de fluide caloporteur (20), étant entendu que
la direction (21) du fluide caloporteur peut changer, et que
le premier circuit de fluide frigorigène (100) est rempli d'un premier fluide frigorigène (101) qui peut être mis en circulation dans une première direction de débit massique (101) par un compresseur (110),
le débit massique du premier fluide frigorigène (101) résultant sensiblement de la puissance du compresseur mais aussi de la position d'un détendeur (140),
le premier fluide frigorigène (101) étant en outre mis en circulation par un évaporateur (130) et un premier échangeur de chaleur (120) qui, en mode de chauffage, fonctionne comme condenseur, la machine frigorifique (10) étant couplée thermiquement au circuit de fluide caloporteur (20) par le biais du premier échangeur de chaleur (120) et, en outre,
une deuxième zone d'échangeur de chaleur (302) étant couplée thermiquement au circuit de fluide caloporteur (20), et
le deuxième échangeur de chaleur (300) étant prévu pour la transmission contrôlée de la chaleur de l'inverter (201) au circuit de fluide caloporteur (20).
